# EUROPÄISCHE PATENTSCHRIFT

(11) **EP 2 359 545 B1**
(45) Veröffentlichungstag und Bekanntmachung des Hinweises auf die Patenterteilung: **15.08.2012**
(21) Anmeldenummer: 09748708.6
(22) Anmeldetag: 27.10.2009
(51) Int. Cl.: H04L 12/56, H04W 40/02

(54) **VERFAHREN ZUR BEREITSTELLUNG VON SICHERHEITSMECHANISMEN IN DRAHTLOSEN MESH-NETZWERKEN**
METHOD FOR PROVIDING SAFETY MECHANISMS IN WIRELESS MESH NETWORKS
PROCÉDÉ POUR ÉTABLIR DES MÉCANISMES DE SÉCURITÉ DANS DES RÉSEAUX MAILLÉS SANS FIL

(30) Priorität: 27.10.2008 EP 08018760; 27.10.2008 DE 102008053409
(43) Veröffentlichungstag der Anmeldung: 24.08.2011
(73) Patentinhaber: Siemens Enterprise Communications GmbH & Co. KG, 81379 München (DE)
(72) Erfinder: GAMER, Thomas, 68723 Oftersheim (DE); SCHWINGENSCHLÖGL, Christian, 85640 Putzbrunn (DE); BAHR, Michael, 81827 München (DE); VÖLKER, Lars, 80687 München (DE)
(74) Vertreter: Fritzsche, Thomas
(86) Internationale Anmeldenummer: PCT/EP2009/007707
(87) Internationale Veröffentlichungsnummer: WO 2010/049138

(56) Entgegenhaltungen:
- EP-A- 1 724 991
- US-A1- 2003 108 029
- US-B1- 7 362 709

## Beschreibung

Die Erfindung beschreibt ein Verfahren zur Bereitstellung von Sicherheitsmechanismen in drahtlosen Mesh-Netzwerken gemäß dem Oberbegriff des Patentanspruchs 1.

Ein drahtloses Netzwerk ist ein Netzwerk, in welchem Daten nach dem Wireless Local Area Network (WLAN) Standard übertragen werden. In der WLAN Standardfamilie IEEE 802.11 sind gleichberechtigte Access Points vorgesehen. Je nach Konfiguration des Netzes bieten einige von ihnen. einen Übergang zu einem Backbone-Netz. Ein Access Point und die bei ihm angemeldeten Stationen bilden eine Funkzelle. Der größte Teil der WLAN Installationen wird im Infrastruktur-Modus betrieben. Hierbei können die Stationen in einer Funkzelle nur über den Access Point mit anderen Stationen oder mit den über das Backbone-Netz erreichbaren Geräten kommunizieren. Die einzelnen Funkzellen werden durch das Backbone-Netz miteinander verknüpft, wodurch ein übergreifendes WLAN entsteht. Bislang realisiert man das Backbone-Netz hauptsächlich mit einem Kabelnetz, typischerweise einem Ethernet LAN.

Der kommende IEEE 802.11s Standard ist eine Erweiterung, damit die Funkzellen auf das Backbone-Netz im Kabelnetz verzichten können. Hieraus resultiert ein Mesh-WLAN, in dem die Verbindung zwischen den Access Points nun auch drahtlos und für die Stationen vollkommen transparent erfolgt. Das Mesh-Netz arbeitet als ein selbstorganisierendes Netzwerk, das sich dynamisch aus den teilnehmenden Knoten bildet. Jeder teilnehmende Knoten funktioniert dabei auch als Router, nimmt am Routing Protokoll teil und leitet den Datenverkehr anderer Knoten weiter. Im Gegensatz zur Single-Hop Kommunikation von IEEE 802.11 WLANs wenden IEEE 802.11 s Mesh-WLANs Routing Mechanismen auf dem MAC Layer an, um eine Multi-Hop Kommunikation durchzuführen.

Werden WLANs im Unternehmen eingesetzt, so müssen diese Netze durch Kryptierungsmaßnahmen abgesichert werden. Neben einer Authentifizierung ist die

Abhör- und damit Eindringsicherheit eine wichtige Voraussetzung: Aus dem IEEE Standards for Information Technology - Telecommunications and Information Exchange between Systems - Local and Metropolitan Area Network - Specific Requirements - Part 11: Wireless LAN Medium Access Control (MAC) and Physical Layer (PHY) Specifications: Amendment 6: Medium Access Control (MAC) Security Enhancements, 2004 ist bekannt, dass der IEEE 802.11 i Standard einige neue WLAN Security Mechanismen definiert und das Robust Secure Network Protokoll (RSN) einführt, um eine sichere Verbindung mit einem Access Point aufzubauen. RSN wird zur Abwehr externer Angriffe, wie beispielsweise Abhören, Datenänderung, und Dateneinspeisung, angewendet, indem eine effektive Zugriffskontrolle als auch ein kryptographischer Datenschutz durchgeführt werden.

Die Verwendung von Gruppenschlüsseln in IEEE 802.11 i, mit denen der Datenverkehr zwischen den Knoten vor Abhören durch Verschlüsselung gesichert wird, wobei ein Gruppenschlüssel für die Kommunikation mit mehreren anderen Knoten benutzt wird, kann aufgrund der Multi-Hop Weiterleitung von Daten keinen ausreichenden Schutz vor Veränderung oder Mitlesen der Daten durch andere Teilnehmer des Netzes, d.h. gegen interne Angreifer, gewährleisten. Bedenkt man außerdem mögliche Angriffe auf der Routingebene, beispielsweise das absichtliche Verwerfen von Datenverkehr oder das gezielte Beeinflussen der Routing-Pfade durch andere Teilnehmer des Mesh-Netzwerkes, wird klar, dass auch die Nutzung von paarweise verschiedenen Schlüsseln nicht ausreichend ist und die existierenden Mechanismen entweder zu komplex sind, einen sehr hohen Aufwand verursachen oder für den benötigten Schutz in Mesh-Netzwerken nicht ausreichen. Für weitere Details wird auf die Patentanmeldung US-A1-2003/108029 sowie auf das Patent US-B1-7362709 verwiesen.

Ein Vorschlag für die Einführung eines Währungssystems als Anreiz zur Kooperation, insbesondere zur Weiterleitung fremder Datenpakete, ist aus Levente Buttyán, Jean-Pierre Hubaux. Nuglets: a Virtual Currency to Stimulate Cooperation in Self-Organized Mobile Ad Hoc Networks, 2001 bekannt, der verhindern soll, dass sich die Teilnehmer des Netzes egoistisch verhalten, d.h. absichtlich Pakete verwerfen, die weitergeleitet werden sollen und dadurch die Kommunikation anderer Teilnehmer stören oder sogar komplett verhindern. Hierbei wird die korrekte Weiterleitung von fremdem Verkehr belohnt und man darf im Gegenzug eigenen Verkehr ins Netz senden. Eine solche Lösung ist allerdings in Mesh-Netzwerken aufgrund der unterschiedlichen Leistungsfähigkeit der Knoten schlecht einsetzbar und benötigt einen unverhältnismäßig hohen Aufwand zur Berechnung eines fairen Kostenmodells.

Ein älterer Ansatz zum Schutz des Netzes gegen externe Angreifer ist Wired Equivalent Privacy (WEP). WEP weist allerdings viele Sicherheitslücken auf und wird daher nicht mehr eingesetzt. Bei 802.11i hingegen sind diese Probleme zwar beseitigt, Angriffe durch selektives Verwerfen weiterzuleitender Pakete sowie der Einsatz in Multi-Hop Umgebungen wurden jedoch nicht bedacht.

Sicherheitsmechanismen auf der Management-Ebene, beschrieben in Draft Standard for Information Technology - Telecommunications and Information Exchange between Systems - Local and Metropolitan Area Network - Specific Requirements - Part 11: Wireless LAN Medium Access Control (MAC) and Physical Layer (PHY) Specifications: Amendment: Protected Management Frames, D1.0, 2006, sowie auf der Routing-Ebene, beispielsweise Secure OLSR, beschrieben in Thomas Clausen, Emmanuel Baccelli, Securing OLSR Problem Statement, LIX, Ecole Polytechnique, 2005, oder SAODV, beschrieben in Manel Guerrero Zapata, Secure Ad hoc On-Demand Distance Vector (SAODV) Routing, Technical University of Catalonia (UPC), 2005, zum Schutz der Routing-Protokolle, setzen zum einen eine vorhandene Schlüsselverteilung und -verwaltung voraus und können zum anderen Manipulationen und Angriffe durch legitime Netzteilnehmer ebenfalls nicht verhindern.

Es ist Aufgabe der vorliegenden Erfindung, ein Verfahren und eine Anordnung zur Bereitstellung von Sicherheitsmechanismen in drahtlosen Mesh-Netzwerken anzugeben, welche gegenüber dem Stand der Technik eine Erhöhung der Sicherheit in drahtlosen Mesh-Netzwerken zur Verfügung stellen.

Diese Aufgabe wird ausgehend von dem Oberbegriff des Anspruchs 1 durch dessen kennzeichnende Merkmale gelöst. Ausführungsformen der Erfindung sind in den abhängigen Ansprüchen angegeben.

Das erfindungsgemäße Verfahren führt zur Erhöhung der Sicherheit in drahtlosen Mesh-Netzen differenzierte Vertrauensstufen ein, die durch einen Type of Protection ToP definiert sind. Die Erfindung umfasst einerseits den Mechanismus, dass die Datenpakete mit einem ToP-Wert markiert werden und der ToP-Wert so im Mesh-Netzwerk transportiert wird, andererseits bekommt auch jeder teilnehmende Knoten im Mesh-Netzwerk mindestens einen ToP-Wert zugewiesen. In den Knoten des Mesh-Netzwerkes wird dann mit jedem eingehenden Datenpaket die Entscheidung getroffen, ob eine Übereinstimmung zwischen den ToP-Werten des Knotens und dem ToP-Wert des Datenpaketes vorliegt. Zusätzlich wird auch geprüft, ob die Ziel- oder Empfängeradresse des MAC Layer (L2) mit seiner eigenen Adresse übereinstimmt. Die Mechanismen des Routing werden also durch die Nutzung der ToP-Werte ergänzt. Wenn diese ToP-Werte Kombination im Knoten zulässig ist, kann das Datenpaket von diesem Knoten verarbeitet und an einen Knoten mit einem entsprechenden ToP-Wert weitergeleitet werden. Ist diese ToP-Werte Kombination im Knoten hingegen nicht zulässig, dann kann das Datenpaket von diesem Knoten nicht verarbeitet und auch nicht an einen Knoten mit einem entsprechenden ToP-Wert weitergeleitet werden. Durch diese Differenzierung wird das Routing des Datenverkehrs beeinflusst und die Durchführung von Angriffen wie z.B. die selektive Weiterleitung wird reduziert.

Die Differenzierung der Vertrauensstufen kann nicht verhindern, dass bösartige interne Knoten innerhalb derselben Vertrauensstufe erfolgreiche Angriffe durchführen, dennoch wird durch die Differenzierung der Vertrauensstufen die Anzahl möglicher bösartiger interner Knoten auf ein Minimum reduziert und es wird verhindert, dass interne Knoten außerhalb der Vertrauensstufe erfolgreiche Angriffe durchführen können.

Durch Erweiterung des Mesh-Headers um ein Oktett kann ein ToP Feld vorgesehen sein, in dem der ToP-Wert des Datenpaketes enthalten ist, wobei ein ToP Flag im Mesh Flag Feld des Mesh-Headers definiert werden kann, das die Präsenz des ToP Feldes im Mesh-Header anzeigt. Das im Mesh-Header eines Datenpaketes gemäß dem Standard IEEE 802.11 s vorhandene Feld Mesh Flags wird erfindungsgemäß benutzt, um ein weiteres ToP Flag zu definieren. Dieses ToP Flag zeigt an, dass dem Mesh Address Extension Feld nachfolgend das Mesh ToP Feld mit der Länge von einem Oktett folgt. Dieses Mesh ToP Feld wird erfindungsgemäß eingeführt und dient der Speicherung des ToP-Wertes des Datenpaketes. Die Verankerung des ToP-Wertes im Mesh-Header für den Transport im IEEE 802.11 s Mesh-Netzwerk ermöglicht es, dass die ToP-Werte der Datenpakete von allen dazwischenliegenden Knoten gelesen werden können und die richtigen Entscheidungen für die Weiterleitung getroffen werden können.

In einer anderen Lösung kann der ToP-Wert in einem zusätzlich eingefügten Header oberhalb oder unterhalb des MAC Headers transportiert werden.

Wegen der Multi-hop Kommunikation auf dem MAC Layer wird für die Mesh-Rahmen das 4 Adressen Rahmenformat verwendet, wobei im Frame Control Feld die Flags ToDS und FromDS auf den Wert 1 gesetzt sind. Dadurch ist garantiert, dass alleinig Mesh-fähige Knoten den zusätzlichen Mesh-Header zu Beginn des Bodyrahmens mit darin befindlichen Nutzdaten bearbeiten. Legacy Knoten nach dem IEEE 802.11 Standard, die nicht die Fähigkeiten für Mesh-Netze und die Erweiterungen besitzen, erkennen lediglich eine ungültige ToDS / FromDS Kombination und verwerfen das Datenpaket.

Die Festlegung des ToP-Wertes kann anhand von Informationen aus dem Applikations-Layer der Teilnehmer oder dem Netzwerk-Layer in den Knoten erfolgen. Eine Lösung besteht darin, ToP-Werte wie VLAN Tags zu verwenden und unterschiedliche ToP Vertrauensstufen unterschiedlichen IP Adressbereichen zuzuweisen. Das Einfügen des ToP-Wertes in das Datenpaket erfolgt beispielsweise durch eine Routing Funktion im Ursprungs-Knoten und ist transparent für die Applikation. In einer anderen Lösung hat die Applikation bei einem Teilnehmer selbst die Möglichkeit den entsprechenden ToP-Wert auszuwählen und in das Datenpaket einzufügen. In einer weiteren Lösung kann der Wert des IP Type of Service Feldes durch eine Netzwerk Funktion im Ursprungs-Knoten mit berücksichtigt werden.

In jedem Knoten wird für jeden assoziierten ToP-Wert eine Weiterleitungstabelle geführt, in der die ToP-Werte der vertrauenswürdigen Knoten aufgeführt sind. Damit sind die Vertrauensbeziehungen zwischen den Knoten bekannt und ein Routing kann entsprechend erfolgen.

Für das Routing der Datenpakete im Mesh-Netzwerk ist ein Path-Selection-Protocol definiert, das die ToP-Werte aus den Weiterleitungstabellen und damit die Vertrauensbeziehungen nutzt.

Ein Authentifizierungsserver kann für die Authentifizierung der dem Netz beitretenden Knoten vorgesehen sein und dieser kann aus dem drahtlosen Mesh-Netzwerk erreichbar sein. Der Authentifizierungsserver kann jedem teilnehmenden Knoten einen oder mehrere ToP-Werte zuweisen und diese Werte können in die Weiterleitungstabellen eingetragen werden. Der Authentifizierungsserver, der aus dem Netz erreichbar ist und der für die initiale Authentifizierung der dem Netz beitretenden Knoten zuständig ist, weist jedem teilnehmenden Knoten eine oder mehrere Vertrauensstufen zu, die durch einen oder mehrere ToP-Werte, die in den Weiterleitungstabellen gespeichert werden, repräsentiert sind. Über die unterschiedlichen ToP-Werte der Knoten werden gleichzeitig unterschiedliche Verkehrsklassen im Netz definiert, wodurch eine Trennung des Datenverkehrs über das Path-Selection-Protocol erreicht wird.

Der im Mesh-Netzwerk im Datenpaket transportierte ToP-Wert wird von den teilnehmenden Knoten gelesen und es erfolgt eine Weiterleitung an einen Knoten, der einen entsprechenden ToP-Wert des Knotens assoziiert hat. Durch diese Zuordnung der ToPs der Datenpakete zu den teilnehmenden Knoten werden eine Trennung des Datenverkehrs und ein Routing in verschiedenen Vertrauensstufen erzielt. Ein selektives Weiterleiten von Datenpaketen wird hierdurch verhindert.

Die Einführung der Differenzierung der Vertrauensstufen in Mesh-Netzwerken erfordert auch eine passende Metrik. So macht eine fein granulare Aufsplittung in unterschiedliche ToPs das Netz fragil, d.h. die Datenpakete werden nur mehr jeweils über Knoten des gleichen ToPs weitergeleitet, was die Anzahl möglicher Routen sehr klein werden oder das Netz partitionieren lässt. Die Erfindung sieht deshalb die Verwendung eines hierarchischen ToP-Mappings vor. Durch die hierarchische Anordnung der Vertrauensstufen kann ein Lastausgleich erfolgen und die Partitionierung des Netzes wird vermieden.

In einem ToP-Mapping mit gänzlich geordneten Vertrauensstufen können Pakete mit einer niedrigen Vertrauensstufe von jedem Knoten im Mesh-Netzwerk verarbeitet werden, da die Knoten mit einer höheren Vertrauensstufe zusätzlich auch die niedrigere Vertrauensstufe erhalten.

In einem ToP-Mapping mit teilweise geordneten Vertrauensstufen sind partielle Bereiche von Vertrauensstufen der Knoten gänzlich geordnet, wobei die Pakete in diesen Bereichen wie oben beschrieben verarbeitet werden. Zwischen gleichwertigen Bereichen von Vertrauensstufen können jedoch keine Pakete mit der Vertrauensstufe des jeweiligen anderen Bereiches ausgetauscht werden.

In einem ToP-Mapping mit ungeordneten Vertrauensstufen können zwischen zwei Knoten mit gleichwertigen Vertrauensstufen Pakete mit der Vertrauensstufe des jeweiligen anderen Knotens ausgetauscht werden, jedoch nicht Pakete mit einer niedrigeren Vertrauensstufe.

Zusätzlich zu den ToPs erhält jeder Knoten nach der Authentifizierung die assoziierten IEEE 802.11 i Gruppenschlüssel vom Authentifizierungsserver. Die Übertragung dieser Schlüssel ist durch einen Pairwise Master Key (PMK) gesichert, der vom Authentifizierungsserver zum authentifizierenden Knoten übermittelt wird. Der PMK wird während der Authentifizierung erzeugt. Danach ist der Knoten in der Lage am MAC Layer Routing Protokoll teilzunehmen.

Die Erfindung sieht für den Transport des ToP Feldes zumindest einen Integritätsschutz des ToP Feldes vor, um einen Sicherheitsgewinn zu realisieren. Wenn die Integrität des ToP Feldes nicht gesichert ist, können neue Angriffe auftreten. Ein Angreifer kann beispielsweise die Vertrauensstufe eines Paketes heruntersetzen, um Knoten mit einer anderen Vertrauensstufe zu befähigen, Pakete zu lesen, zu verändern oder zu verwerfen. Weiterhin kann ein solcher Abstufungs-Angriff dazu benutzt werden, Denial-of-Service Angriff auf spezifische Knoten oder Teile des Mesh-Netzwerkes durchzuführen. Wenn beispielsweise ein bestimmter ToP-Wert nur einen einzigen Pfad durch das Mesh-Netz unterstützt und der gesamte Datenverkehr auf diesen ToP-Wert gesetzt wird, dann wird dieser Pfad schnell überladen sein. Daraus folgt, dass keine Kommunikationen mehr auf diesem Pfad möglich ist und dementsprechend für diesen ToP-Wert.

Die Integrität wird durch die Verwendung des passenden ToP Gruppenschlüssels erreicht. Somit wird garantiert, dass Knoten die nicht im Besitz dieses ToP Gruppenschlüssels sind, das ToP Feld nicht modifizieren können, ohne die Integrität des Paketes zu zerstören.

Die Integrität des ToP-Feldes kann durch die Verwendung des Gruppenschlüssels und die Bildung einer Signatur geschützt werden, wobei die veränderlichen Felder des Mesh-Headers, die während der Weiterleitung modifiziert werden, nicht für die Berechnung der Signatur verwendet werden. Da einige Mesh-Header Felder während der Weiterleitung modifiziert werden, weshalb auch die Signaturen zum Integritätsschutz ungültig werden, ist es notwendig, die veränderlichen Felder nicht für die Berechnung der Signatur zu verwenden. Der Integritätsschutz für diese Felder ist dann nicht gegeben, oder der Empfänger versucht die Werte der veränderlichen Felder vorherzusagen, was oftmals einfach möglich ist.

Vorteilhaft sieht die Erfindung vor, dass der vertrauliche Datenverkehr ebenso durch die Gruppenschlüssel kryptographisch verschlüsselt wird, da aufgrund der Eigenschaften des drahtlosen Transportmediums jeder Knoten fähig ist, den Datenverkehr abzuhören oder eigenen Datenverkehr einzuspeisen. Durch die Verteilung der Gruppenschlüssel pro ToP und die Anwendung von Verschlüsselung ist gewährleistet, dass nur Knoten, die den richtigen Gruppenschlüssel besitzen, dazu in der Lage sind den Paketinhalt zu lesen. Das Abhören vertraulicher Daten wird hierdurch verhindert, was gerade in Unternehmens-Umgebungen sehr wichtig ist, in denen Besucher dasselbe WLAN-Mesh nutzen können wie die Mitarbeiter.

Aus der IEEE Computer Society, IEEE Standard for Local and Metropolitan Area Networks, Specific Requirements, Part 11: Wireless LAN Medium Access Control (MAC) and Physical Layer (PHY) Specifications, Juni 2007, ist das Robust Secure Network (RSN) Protokoll bekannt, das für eine gesicherte Kommunikation in einem IEEE 802.11 Netz eingesetzt wird. Üblicherweise schützt RSN nur die Rahmen die zwischen der Station und dem Access Point ausgetauscht werden, der Multi-Hop Fall wird aber nicht im IEEE 802.11 Standard beschrieben.

Die Erfindung sieht die Erweiterung des RSN Konzeptes auf Multi-Hop Mesh-Netzwerke vor. Es erfolgt eine Änderung der Mechanismen bei der Schlüsselverteilung sowie der Authentifizierung, die insbesondere einen Schutz der Ende-zu-Ende Kommunikation garantiert. Damit ein Supplicant, der ein neu hinzugekommener Knoten ist, auf die Netzwerkresourcen zugreifen darf, muss er sich am Netzwerk authentifizieren. Die Authentifizierung erfolgt durch den Authenticator, typischerweise ein Access Point im Infrastrukturmodus, der mittels eines Authentication Servers die Authentizität des Supplicants überprüft und den Zugriff auf die durch den Authenticator angebotenen Dienste zulässt oder abweist. Dabei wird ein ToP-Wert zugewiesen.

Die Authentifizierung zwischen dem Supplicant und dem Authentication Server kann auf Basis eines gemeinsamen Schlüssels oder über IEEE 802.1X, wie aus IEEE Computer Society, IEEE Standard for Local and Metropolitan Area Networks, Port-Based Network Access Control, Dec. 2004, bekannt, und das Extensible Authentication Protokoll (EAP), wie in B. Aboba, L Blunk, J. Vollbrecht, J. Carlson, and H. Levkowetz, Extensible Authentication Protocol (EAP), IETF, RFC 3748, June 2004, beschrieben, erfolgen. Die Kommunikation zwischen dem Authenticator und dem Authentication Server wird sodann über ein Backend-Protokoll wie beispielsweise RADIUS, beschrieben in C. Rigney, S. Willens, A. Rubens, and W. Simpson, Remote Authentication Dial In User Service (RADIUS), IETF, RFC 2865, June 2000, durchgeführt und über einen gemeinsamen Schlüssel zwischen Authenticator und Authentication Server gesichert. Sowohl der Supplicant und der Authenticator, als auch der Authenticator und der Authentication Server müssen nicht notwendigerweise direkt miteinander verbunden sein, sondern sie können auch über mehrere Hops unter Verwendung des Mesh-Netzwerkes miteinander kommunizieren.

Vorteilhaft kann sich ein neuer Mesh-Knoten mit einem existierenden Mesh-Netzwerk authentifizieren, indem er einen speziellen Knoten wie beispielsweise den Mesh Portal Point als Authenticator auswählt.

Ausführungsformen der Erfindung sind beispielhaft in den Figuren dargestellt.
Fig. 1 zeigt Mesh-Knoten mit unterschiedlichen Vertrauensstufen und einem Authentifizierungsserver,
Fig. 2 zeigt das Format des Mesh-Datenpaketes nach dem IEEE 802.11s Standard,
Fig. 3 zeigt das Format des erweiterten Mesh-Headers mit ToP Feld,
Fig. 4 zeigt die vollständig geordneten Vertrauensstufen in einer Wohnumgebung,
Fig. 5 zeigt die teilweise geordneten Vertrauensstufen in einer Unternehmensumgebung,
Fig. 6 zeigt die ungeordneten Vertrauensstufen in einer Unternehmensumgebung, und
Fig. 7 zeigt die Multi-Hop Authentifizierung in einem Mesh-Netzwerk.

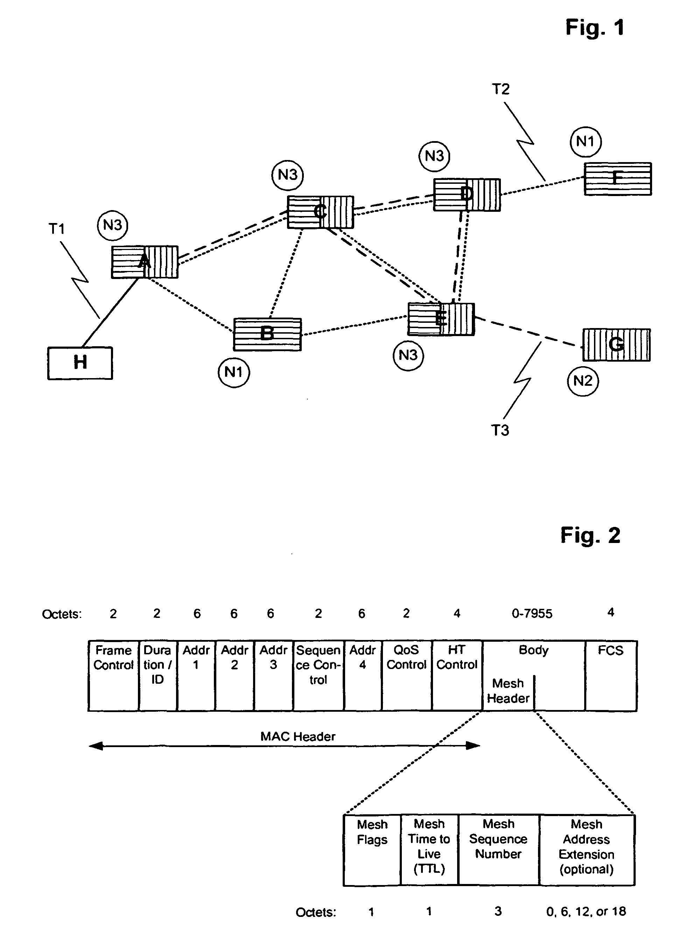

In Fig. 1 zeigt eine Anordnung von 7 Mesh-Knoten A, B,...G und einem Authentifizierungsserver H, die exemplarisch in einem kleinen Unternehmensumfeld vorzufinden ist. Knoten A ist ein Mesh-Zugangspunkt, der die Verbindung zum Authentifizierungsserver oder zu anderen Netzen bereitstellt, z.B. zu anderen Mesh-Netzwerken oder direkt zum Internet. Die anderen Knoten sind Mesh Points oder Mesh Access Points. Alle Mesh-Knoten nehmen am MAC Layer Routing Protokoll teil, das in diesem speziellen Mesh-Netzwerk benutzt wird. WLAN Stationen, die mit einen Mesh Access Point verbunden sind und transparent in das Mesh-Netzwerk integriert sind, sind in dieser Figur nicht berücksichtigt.

In dieser Figur sind drei Vertrauensstufen definiert, die als ToP Besucher N1 und ToP Mitarbeiter N2 oder der Kombination N3 dargestellt sind. Den Knoten B und F mit dem ToP Besucher N1 ist es nur zeitweise erlaubt am Mesh-Netzwerk teilzunehmen und sie gehören nicht zum Unternehmen, deshalb bekommen sie einen anderen ToP zugewiesen als der Knoten G mit dem ToP Mitarbeiter N2. Wenn jedem Knoten nur ein einzelner ToP zugewiesen werden kann, dann würde das Netz in mehrere Netze mit unterschiedlichen Vertrauensstufen geteilt. Das führt zu einer schlechten Netzabdeckung und die Knoten werden eher unerreichbar. Deshalb ist die Zuordnung von mehreren ToPs zu einem Knoten erlaubt, was die Weiterleitung des Datenverkehrs zu Knoten mit einem anderen ToP ermöglicht. In Fig. 1 besitzen die Knoten A, C, D. E mit dem kombinierten ToP N3 den ToP Mitarbeiter und zusätzlich den ToP Besucher. Dadurch ist garantiert, dass diese Knoten A, C, D und E den gesamten Datenverkehr des Mesh-Netzwerkes weiterleiten können.

Mit dem Bezugszeichen T1 ist der Vorgang der Authentifizierung eines teilnehmenden Knotens mit dem Authentifizierungsserver H dargestellt, wobei nach der Authentifizierung jeder Knoten seine ToP-Werte und die assoziierten Gruppenschlüssel vom Authentifizierungsserver H erhält. Mit dem Bezugszeichen T2 ist der Datenverkehr mit der Vertrauensstufe eines Besuchers dargestellt, der im ToP Feld des Mesh-Headers den Wert ToP Besucher enthält. Mit dem Bezugszeichen T3 ist der Datenverkehr mit der Vertrauensstufe eines Mitarbeiters dargestellt, der im ToP Feld des Mesh-Headers den Wert ToP Mitarbeiter enthält. Zwischen den Knoten A, C, D und E werden die Datenpakete mit den beiden Vertrauensstufen ToP Besucher und ToP Mitarbeiter weitergeleitet.

Mesh-Knoten, für die ein geringer Stromverbrauch beabsichtigt ist, können vorteilhaft ihre Funknutzung reduzieren, indem sie nur die Datenpakete ihrer eigenen Vertrauensstufe weiterleiten, wie es beim Knoten G in Fig. 1 dargestellt ist.

In Fig. 2 ist das Format eines Mesh-Datenpaketes in Mesh-Netzen entsprechend dem Standard IEEE 802.11s dargestellt. Die Daten können sowohl ausschließlich innerhalb eines Mesh-Netzwerkes versendet werden, aber auch die Grenzen des Mesh-Netzwerkes überschreiten. Der IEEE 802.11 MAC Header eines Mesh-Datenpaketes sieht daher die Angabe von 4 Adressen und eines zusätzlichen Mesh-Headers vor, um die Pakete über mehrere Hops zum Ziel zu leiten. Im Mesh-Header ist das Mesh Sequence Number Feld enthalten, das eine Ende-zu-Ende Sequenznummer enthält, um Duplikate und Out-of Order Frames zu erkennen. Interagiert das Mesh-Netzwerk mit Knoten, die nicht zum Mesh gehören, gibt es die Möglichkeit, durch das Setzen des Address Extension Flags im Mesh Flags Feld weitere Adressen im Mesh Address Extension Feld hinzuzufügen.

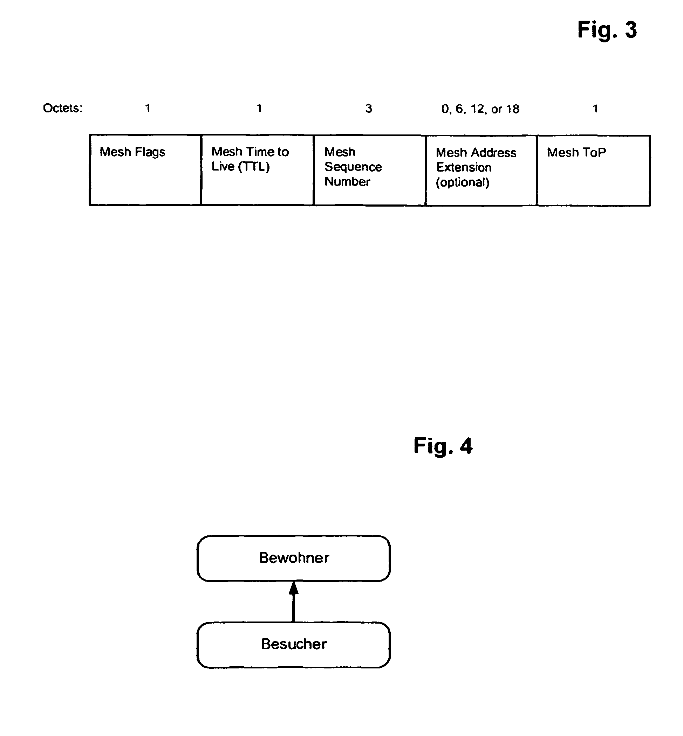

In Fig. 3 ist das Format des erweiterten Mesh-Headers dargestellt. Der aus dem IEEE 802.11 s Standard bekannte Mesh-Header ist erfindungsgemäß um das Mesh ToP Feld erweitert, das hinter dem Mesh Address Extension Feld nachfolgend eingefügt ist. Im Mesh Flag Feld ist ein weiteres Flag ToP definiert, wodurch angezeigt wird, ob dieses Mesh ToP Feld im Mesh-Header enthalten ist oder nicht.

In Fig. 4 sind beispielhaft zwei gänzlich geordnete Vertrauensstufen in einer Wohnumgebung dargestellt. Der mit ToP Bewohner gekennzeichnete Datenverkehr wird nur zu Knoten mit der Vertrauensstufe Bewohner weitergeleitet. Wenn die Vertraulichkeit durch Verschlüsselung zugesichert ist, dann kann dieser Verkehr nicht von einem Knoten mit dem ToP Besucher gelesen werden. Pakete, die mit ToP Besucher gesichert sind, können von jedem Knoten im Mesh-Netzwerk weitergeleitet und gelesen werden, da wegen der gänzlichen Ordnung der Hierarchie der Vertrauensstufen jeder Knoten mit dem ToP Bewohner zusätzlich auch den ToP Besucher erhält. Dadurch wird Bewohner-Knoten mehr vertraut als Besucher-Knoten.

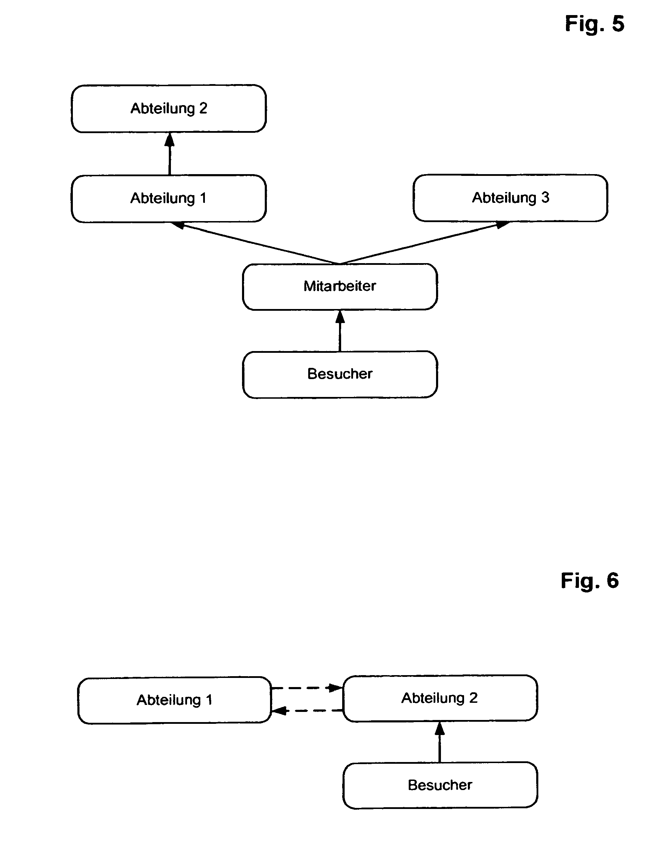

In Fig. 5 sind beispielhaft mehrere teilweise geordnete Vertrauensstufen dargestellt, wie sie in großen Unternehmens-Mesh-Netzwerken einer Einzelfirma benutzt werden können. Den Knoten mit dem ToP Besucher wird am wenigsten vertraut. Die Knoten mit dem ToP Mitarbeiter sind in verschiedene Abteilungen der Firma unterteilt. Die Abteilungen 1 und 2 sind gänzlich geordnet, die Abteilung 3 hat keine Beziehung zu den anderen. In dieser Figur muss der interne Verkehr der Firma wenigstens mit dem ToP Mitarbeiter geschützt werden. Wenn Vertraulichkeit für den Verkehr von Abteilung 1 notwendig ist, dann muss deren ToP benutzt werden, sonst wären im Falle von ToP Mitarbeiter auch die Mitarbeiter der Abteilung 3 in der Lage den übertragenen Verkehr zu lesen. Der mit ToP Besucher gekennzeichnete Datenverkehr kann von jedem Knoten weitergeleitet werden, der am Mesh-Netzwerk teilnimmt. Knoten mit dem ToP Besucher hingegen sind nur in der Lage den Verkehr zu lesen und weiterzuleiten, der mit dem ToP Besucher geschützt ist.

In Fig. 6 sind beispielhaft die ungeordneten Vertrauensstufen in einer Unternehmensumgebung dargestellt. Hierbei kann der Verkehr mit dem ToP Abteilung 1 von Knoten mit der Vertrauensstufe Abteilung 2 weitergeleitet werden und umgekehrt. Pakete, die mit dem ToP Besucher gekennzeichnet sind werden hingegen nur von Knoten mit dem ToP Besucher und Knoten mit dem ToP Abteilung 2 weitergeleitet. Solch eine Anordnung kann z.B. notwendig sein, um die Ressourcen der Knoten mit dem ToP Abteilung 1 zu schonen

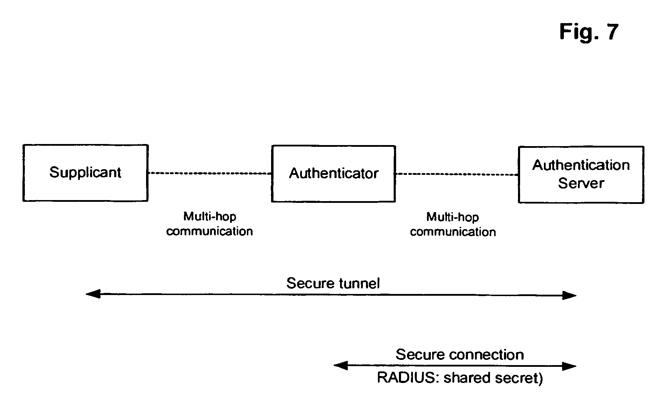

In Fig. 7 ist die Multi-Hop Authentifizierung in einem Mesh-Netzwerk dargestellt. Zur Authentifizierung des Supplicants wird eine sichere Verbindung mit dem Authenticator aufgebaut, der seinerseits die Authentizität des Supplicants mit dem Authentication Server prüft. Die Authentifikation zwischen dem Supplicant und dem Authentication Server erfolgt in einem gesicherten Tunnel auf Basis eines gemeinsamen Schlüssels oder über IEEE 802.1 X und das EAP Protokoll. Die Kommunikation zwischen dem Authenticator und dem Authentication Server wird über ein Backend-Protokoll wie beispielsweise das RADIUS Protokoll durchgeführt und über einen gemeinsamen Schlüssel zwischen Authenticator und Authentication Server gesichert. Die Kommunikation kann dabei über mehrere Hops im Mesh-Netzwerk erfolgen.

### Bezugszeichenliste

- A - G: Knoten
- H: Authentifizierungsserver
- N1: Knoten mit ToP Besucher
- N2: Knoten mit ToP Mitarbeiter
- N3: Knoten mit ToP Mitarbeiter und zusätzlichem ToP Besucher
- T 1: Authentifizierung
- T2: Datenverkehr mit ToP Besucher
- T3: Datenverkehr mit ToP Mitarbeiter

## Patentansprüche

1. Verfahren zur Bereitstellung von Sicherheitsmechanismen in drahtlosen Mesh-Netzwerken mit mehreren Knoten, die in einem drahtlosen mittels Mesh-Routing im MAC Layer vermaschten Netzwerk durch eine Multi-Hop Kommunikation miteinander verbunden sind,
wobei jeder Knoten als Router aktiv ist, um den Datenverkehr der anderen Knoten weiterzuleiten,
**dadurch gekennzeichnet,**
**dass** mindestens zwei differenzierte Vertrauensstufen durch einen Type of Protection (ToP) definiert sind, dessen Wert eine spezifische Vertrauensstufe für die Knoten und Datenpakete repräsentiert,
**dass** die Datenpakete mit einem ToP-Wert im Mesh-Header markiert werden,
**dass** die teilnehmenden Knoten mindestens einen ToP-Wert zugewiesen bekommen, und
**dass** die Knoten anhand der ToP-Werte des Knotens und des Datenpaketes ein Weiterleiten des Datenpaketes im Mesh-Netzwerk vornehmen, wenn diese ToP-Werte-Kombination im Knoten zulässig ist.

2. Verfahren nach Anspruch 1, **dadurch gekennzeichnet,**
**dass** durch Erweiterung des Mesh-Headers um ein Oktett ein ToP Feld vorgesehen ist, in dem der ToP-Wert des Datenpaketes enthalten ist.

3. Verfahren nach Anspruch 1, **dadurch gekennzeichnet,**
**dass** den Datenpaketen entweder durch eine Applikation bei einem Mesh-Netzwerk Teilnehmer ein ToP-Wert zugewiesen wird oder anhand des IP Adressbereiches bei einem Ursprungsknoten unterschiedliche ToP-Werte zugewiesen werden.

4. Verfahren nach Anspruch 1, **dadurch gekennzeichnet, dass**
in den Knoten jeweils eine Weiterleitungstabelle pro ToP-Wert geführt wird, in der die Top-Werte der vertrauenswürdigen Knoten aufgeführt sind.

5. Verfahren nach Anspruch 4, **dadurch gekennzeichnet, dass**
für das Routing der Datenpakete zwischen den Knoten ein Path-Selection-Protocol definiert ist, das die Werte der Weiterleitungstabellen nutzt.

6. Verfahren nach Anspruch 4, **dadurch gekennzeichnet,**
**dass** ein Authentifizierungsserver für die Authentifizierung der dem Netz beitretenden Knoten vorgesehen ist und dieser aus dem drahtlosen Mesh-Netzwerk erreichbar ist, wobei der Authentifizierungsserver jedem teilnehmenden Knoten einen oder mehrere ToP-Werte zuweist und diese Werte in die Weiterleitungstabellen eingetragen werden.

7. Verfahren nach Anspruch 1, **dadurch gekennzeichnet,**
**dass** die Vertrauensstufen der Knoten einem hierarchischen ToP-Mapping zugeordnet werden, die bekannten Vertrauensbeziehungen im Mesh-Netzwerk entsprechen.

8. Verfahren nach Anspruch 7, **dadurch gekennzeichnet,**
**dass** ein ToP-Mapping in gänzlich geordneten, in teilweise geordneten oder in ungeordneten Vertrauensstufen vorgesehen ist.

9. Verfahren nach Anspruch 6, **dadurch gekennzeichnet,**
**dass** der Authentifizierungsserver jedem teilnehmenden Knoten einen assoziierten Gruppenschlüssel nach dem IEEE 802.11 i -2007 Standard zuweist.

10. Verfahren nach Anspruch 9, **dadurch gekennzeichnet,**
**dass** die Integrität des ToP-Feldes durch die Verwendung des Gruppenschlüssels und die Bildung einer Signatur geschützt wird.

11. Verfahren nach Anspruch 9, **dadurch gekennzeichnet,**
**dass** mit dem Gruppenschlüssel ein kryptographischer Schutz für das Datenpaket im drahtlosen Mesh-Netzwerk durchgeführt wird.

12. Verfahren nach Anspruch 6, **dadurch gekennzeichnet,**
**dass** das Robust Secure Network Protocol (RSN) zur Authentifizierung von neuen Knoten und zur Etablierung einer sicheren Multi-Hop Kommunikation erweitert wird.

13. Verfahren nach Anspruch 12, **dadurch gekennzeichnet,**
**dass** die Authentifizierung eines neu hinzukommenden Knotens in einem gesicherten Tunnel zwischen dem neuen Knoten und dem Authentifizierungsserver erfolgt.

14. Verfahren nach Anspruch 12, **dadurch gekennzeichnet,**
**dass** die Kommunikation zwischen dem für die Schlüsselverteilung verantwortlichen Knoten und dem Authentifizierungsserver über ein Backend-Protokoll erfolgt.

15. Mesh-Netzwerk bestehend aus einer Anzahl von drahtlos miteinander verbunden Knoten und mindestens einem Authentifizierungsserver
**dadurch gekennzeichnet,**
**dass** die Knoten und der Authentifizierungsserver zur Durchführung eines der Verfahren gemäß der Patentansprüche 1 bis 20 eingerichtet sind.

## Claims

1. Method for providing safety mechanisms in wireless mesh networks with a plurality of nodes that are interconnected by a multi-hop communication in a wireless network meshed by means of mesh routing in the MAC layer, wherein each node is active as a router to forward the data traffic of the other nodes, **characterised in that** at least two differentiated confidence levels are defined by a type of protection (ToP), the value of which represents a specific confidence level for the nodes and data packets, that the data packets are labelled with a ToP value in the mesh header, that the participating nodes are allocated at least one ToP value and that on the basis of the ToP value of the node and the data packet, the nodes forward the data packet in the mesh network if this ToP value combination is admissible in the node.

2. Method according to claim 1, **characterised in that** by expansion of the mesh header by one byte, a ToP field is provided containing the ToP value of the data packet.

3. Method according to claim 1, **characterised in that** either a ToP value is allocated to the data packet by an application in a mesh network participant or different ToP values are allocated on the basis of the IP address range in an originating node.

4. Method according to claim 1, **characterised in that** one forwarding table per ToP value is kept in the node, listing the ToP values of the trusted nodes.

5. Method according to claim 4, **characterised in that** for routing the data packets between the nodes, a path selection protocol is defined which uses the values of the forwarding tables.

6. Method according to claim 4, **characterised in that** an authentication server is provided for authenticating the nodes using the network and this can be accessed from the wireless mesh network, wherein the authentication server allocates one or more ToP values to each participating node and these values are entered in the forwarding tables.

7. Method according to claim 1, **characterised in that** the confidence levels of the nodes are allocated to a hierarchical ToP mapping and correspond to known confidence relationships in the mesh network.

8. Method according to claim 7, **characterised in that** a ToP mapping is provided in confidence levels which are integrally ordered, partly ordered or unordered.

9. Method according to claim 6, **characterised in that** the authentication server allocates to each participating node an associated group key according to IEEE 802.11 i-2007 standard.

10. Method according to claim 9, **characterised in that** the integrity of the ToP field is protected by the use of the group key and formation of a signature.

11. Method according to claim 9, **characterised in that** a cryptographic protection for the data packet in the wireless mesh network is performed using the group key.

12. Method according to claim 6, **characterised in that** the Robust Secure Network Protocol (RSN) is expanded for authenticating new nodes and establishing a secure multi-hop communication.

13. Method according to claim 12, **characterised in that** the authentication of a newly added node takes place in a secured tunnel between the new node and the authentication server.

14. Method according to claim 12, **characterised in that** the communication takes place between the nodes responsible for the key distribution and the authentication server via a back-end protocol.

15. Mesh network comprising a number of nodes interconnected wirelessly and at least one authentication server, **characterised in that** the nodes and the authentication server are designed to implement one of the methods according to claims 1 to 20.

## Revendications

1. Procédé pour établir des mécanismes de sécurité dans des réseaux maillés sans fil comportant plusieurs noeuds, lesquels sont reliés entre eux grâce à une communication multi-sauts dans un réseau maillé sans fil dont le maillage est réalisé dans la couche MAC au moyen d'un routage maillé,
sachant que chaque noeud agit comme un routeur afin de réacheminer le trafic de données des autres noeuds, **caractérisé en ce qu'**au moins deux niveaux de confiance différenciés sont définis par un type de protection (ToP), dont la valeur représente un niveau de confiance spécifique pour les noeuds et les paquets de données,
**en ce que** les paquets de données sont marqués dans l'entête avec une valeur ToP,
**en ce que** les noeuds abonnés se voient attribuer au moins une valeur ToP,
et **en ce que** les noeuds exécutent un réacheminement du paquet de données dans le réseau maillé à l'aide des valeurs ToP du noeud et du paquet de données, lorsque cette combinaison de valeurs ToP est autorisée dans le noeud.

2. Procédé selon la revendication 1, **caractérisé en ce qu'**un champ ToP est prévu par extension de l'en-tête d'un octet, lequel contient la valeur ToP du paquet de données.

3. Procédé selon la revendication 1, **caractérisé en ce que** soit une valeur ToP est attribuée aux paquets de données par une application dans le cas d'un abonné du réseau maillé soit diverses valeurs ToP sont attribuées aux paquets de données dans le cas d'un noeud d'origine à l'aide du domaine d'adresse IP.

4. Procédé selon la revendication 1, **caractérisé en ce qu'**une table de réacheminement par valeur ToP est respectivement introduite dans les noeuds, dans laquelle figurent les valeurs ToP des noeuds dignes de confiance.

5. Procédé selon la revendication 4, **caractérisé en ce que** pour le routage des paquets de données entre les noeuds, un protocole de sélection de chemin est défini, lequel utilise les valeurs des tables de réacheminement.

6. Procédé selon la revendication 4, **caractérisé en ce qu'**un serveur d'authentification pour l'authentification des noeuds faisant partie du réseau est prévu, lequel est accessible depuis le réseau maillé sans fil, sachant que le serveur d'authentification attribue à chaque noeud abonné une ou plusieurs valeurs ToP et que ces valeurs sont enregistrées dans les tables de réacheminement.

7. Procédé selon la revendication 1, **caractérisé en ce que** les niveaux de confiance des noeuds sont associés à un mappage ToP hiérarchique, lesquels correspondent à des rapports de confiance connus dans le réseau maillé.

8. Procédé selon la revendication 7, **caractérisé en ce qu'**un mappage ToP est prévu dans des niveaux de confiances totalement classés, partiellement classés ou non classés.

9. Procédé selon la revendication 6, **caractérisé en ce que** le serveur d'authentification attribue à chaque noeud abonné une clé de groupe associée selon la norme IEEE 802.11i-2007.

10. Procédé selon la revendication 9, **caractérisé en ce que** l'intégrité du champ ToP est protégée par l'utilisation de la clé de groupe et par la création d'une signature.

11. Procédé selon la revendication 9, **caractérisé en ce qu'**une protection cryptographique pour le paquet de données est mise en oeuvre dans le réseau maillé sans fil avec la clé de groupe.

12. Procédé selon la revendication 6, **caractérisé en ce que** le protocole RSN (réseau bloqué robuste) est étendu aux fins de l'authentification de nouveaux noeuds et aux fins de l'établissement d'une communication multi-sauts fiable.

13. Procédé selon la revendication 12, **caractérisé en ce que** l'authentification d'un nouveau noeud a lieu dans un tunnel sécurisé entre le nouveau noeud et le serveur d'authentification.

14. Procédé selon la revendication 12, **caractérisé en ce que** la communication entre le noeud responsable de la distribution de clés et le serveur d'authentification a lieu par l'intermédiaire d'un protocole backend.

15. Réseau maillé constitué d'un nombre de noeuds reliés entre eux sans fil et d'au moins un serveur d'authentification,
**caractérisé en ce que** les noeuds et le serveur d'authentification servant à la mise en oeuvre d'un des procédés sont installés selon les revendications 1 à 20.
